# EUROPÄISCHE PATENTANMELDUNG

(11) **EP 1 387 547 A1**
(43) Veröffentlichungstag der Anmeldung: **04.02.2004**
(21) Anmeldenummer: 02017260.7
(22) Anmeldetag: 01.08.2002
(51) Int. Cl.: H04L 29/06

(54) **System aus miteinander verbundenen Digitalrechnern und Verfahren zur Steuerung**

(71) Anmelder: He Joe Gesellschaft für Netzwerk- und Systemadministration mbH, 17235 Neustrelitz (DE); Deutsches Zentrum für Luft- und Raumfahrt e.V., 51170 Köln (DE)
(72) Erfinder: Löblich, Michael, Dipl.-Ing., 17235 Neustrelitz (DE); Steiper, Frank, Dr.rer.nat, 85235 Odelshausen-Taxa (DE); Maass, Dirk, Dipl.-Ing., 17237 Hohenzieritz (DE)
(74) Vertreter: Voss, Karl-Heinz

(57) **Zusammenfassung**

Die Erfindung betrifft ein Netzwerk (28) aus miteinander verbundenen Arbeitsplatzrechnern (31). Das Netzwerk (28) ermöglicht eine Verbindung zwischen den Rechnern (31,35), gegebenenfalls Druckern, zentralen Datenspeichern usw. und äußeren Netzwerken (28).

Erfindungsgemäß besitzt jeder Arbeitsplatzrechner (31) des Systems ein statisches Basissystem (36) als Verwaltungskern und Schnittstelle zur Trennung der administrativen Funktionen von den frei konfigurierbaren Anwendungssystemen (37). Das Basissystem (36) besteht aus einem Grundbetriebssystem, einer Bedienschnittstelle und einer virtuellen Maschine mit Virtualisierungssoftware für ein virtuelles Rechnersystem und internes virtuelles Netzwerk (27). Die Anwendungssysteme (37) bauen auf dieses Basissystem auf, wobei diese Software nur auf den virtuellen Maschinen läuft. Der Server besitzt ebenfalls ein Basissystem (36) als Verwaltungskern und Schnittstelle.

## Beschreibung

Die Erfindung betrifft ein Netzwerk aus miteinander verbundenen Arbeitsplatzrechnern(Intranet). Das Netzwerk ermöglicht eine Verbindung zwischen den Rechnern, gegebenenfalls Druckern, zentralen Datenspeichern usw. und äußeren Netzwerken(z. B. Internet).

### [Stand der Technik]

Es sind eine Vielzahl von Netzwerksystemen (Architekturen) bekannt, die je nach der eingesetzten Hardware und den Anwenderbedürfnissen unterschiedlich gestaltet sind. Zur Funktion ist eine Betriebssystemsoftware für den einzelnen Arbeitsplatzrechner, für Server, für die Netzwerkdienste und für Koppelsysteme erforderlich. Die Betriebssystemsoftware des Netzwerksystems und der Arbeitsplatzrechner sowie deren Anwendungssoftware sind dabei systemidentisch.

Der Einsatz von Intel PCs mit Betriebssystemen und Anwendungen von Microsoft für Arbeitsplatzrechner ist als der derzeit kostengünstigste Standard anzusehen, wenn die Aufwendungen für Implementierung und Laufendhaltung der Netzwerke und Namensräume vernachlässigt werden. Jedoch bringt diese Lösung gravierende Nachteile, wie z. B. die Abhängigkeit von proprietären Lösungen, keine Nachvollziehbarkeit der Realisierung von Sicherheitsanforderungen, keine rechtzeitige Korrekturmöglichkeit bekannter Fehler, Inkompatibilität zu anderen Betriebssystemen, wie z. B. UNIX. Es gibt eine Inkompatibilität zu offenen Standards, um eine Kundenabhängigkeit zu erreichen, einen Erneuerungszwang bei z. T. inkompatiblen Formaten, sowie hohe Lizenzgebühren.

Als Alternative bietet sich in jeder Hinsicht der Einsatz eines offenen Systems, wie z. B. Linux als Betriebssystemplattform an. Linux und die derzeit darauf laufenden Anwendungen haben mehrere Vorteile: Einheitliche Lizenz (GPL), Lizenzgebührfreiheit, Stabilität bei der Einhaltung offener Protokolle, Kompatibilität, Sicherheit, Innovativität, Verfügbarkeit der Quellen. Diese Eigenschaften werden nicht proprietär entschieden, sondern als im Prinzip verankert garantiert.

Allerdings sind nicht genügend Anwendungsprogramme vorhanden, bzw. die Verbreitung ist unzureichend. Es besteht somit Bedarf nach Lösungen, die das Zusammenwirken unterschiedlicher Systeme verbessern und vereinfachen.

In der EP 600 235 wird eine Lösung vorgeschlagen, die eine Zusammenarbeit in einem heterogenen Netzwerk mit unterschiedlichen Betriebssystemen, Hardware, Netzwerkprotokollen und Programmiersprachen verbessert. Ziel ist es, Netzwerk weit Services mit einheitlichen Schnittstellen bereitzustellen und deren Management im Netzwerk zu verbessern. Dazu wird die Einordnung eines Servicebrokers zwischen den unterschiedlichen Anwendungs- und Service-Programmen vorgeschlagen. Dieser enthält definierte Programmierungs-Schnittstellen, um den Teilnehmern des Systems den Zugriff auf die Funktionalität des Servicebrokers zu erlauben.

In der DE OS 199 24 575 wird ein Kommunikationssystem mit einem virtuellen Netzwerk vorgeschlagen. Gegenstand der Erfindung ist die Adressenbehandlung bei der Datenübertragung, bzw. die Gestaltung der Namensräume vom inneren zum äußeren Netz. über weitere Funktionen wird nichts ausgeführt.

Bekannt ist auch die Simulation eines Betriebssystems auf einem PC mit einer sogenannten "Virtuellen Maschine" und VMWare(siehe ct' 7/99 S.60 und 18/99 S. 86). Dies ermöglicht den Einsatz von verschiedenen Betriebssystemen auf einem PC und damit die Nutzung der unter diesen Betriebssystemen. verfügbaren Anwendungsprogramme.

In der EP 1 032 875 wird zur Vereinfachung der Konfiguration eines PCs für unterschiedliche Netze die Speicherung der jeweiligen Konfigurationsinformationen des einzelnen Netzes in einem nichtflüchtigen Speicher vorgeschlagen. Dabei schließt das Schreiben der Konfigurationsinformationen das Schreiben von Objektklasseninformationen ein, die sich auf die Netzwerkverbindungsobjekte beziehen.

Die obigen Vorschläge verbessern die Arbeitsweise und erleichtern die Konfiguration für den Anwender im Netzwerk. Insgesamt besitzen die bekannten Systeme von miteinander verbundenen PCs (Netzwerke) aber noch eine Vielzahl von Nachteilen, insbesondere wenn unterschiedliche Betriebssysteme, Anwendersysteme und Hardware genutzt werden. Die Auswahl der Betriebssysteme und der Anwendungssoftware kann nicht optimal nach dem Bedarf des Anwenders erfolgen. Die Systeme ermöglichen zumindest einen teilweisen Zugriff der Anwender auf Server, bzw. erfordern zur Installation von Anwendungssoftware gleichzeitig die Konfiguration und Modifikation des Betriebssystems auf dem PC, wodurch unbeabsichtigt oder beabsichtigt die Sicherheit und Integrität des Gesamtnetzes beeinträchtigt werden können. Änderungen sind jeweils individuell durchzuführen und benötigen damit einen hohen Aufwand und ein umfangreiches Wissen - bezogen auf den durchschnittlichen Benutzer. Die Einhaltung der Nutzungsregelungen für Computer-Arbeitsplätze in einer Einrichtung zum Schutz der im Rechnernetz verfügbaren Ressourcen ist entweder nur durch die restriktive und nicht durch den Anwender veränderbare Konfiguration der Rechnersysteme selbst sicherzustellen oder verlangt die Integration und Instandhaltung zusätzlicher Systeme zur Überwachung der Zugriffsrechte im Netz.

### [Aufgabe der Erfindung]

Aufgabe der Erfindung ist es, ein System von Rechnern (Netzwerk), bestehend aus Client- und Serverkomponenten, so zu gestalten, dass dieses frei auf die Anforderungen der bestehenden IT(Informationstechnik)-Infrastruktur des Anwenders angepasst werden können. Dementsprechend sollen der Verwaltungskern und die Anwendungen eines Rechners unabhängig voneinander mit der jeweils optimalen Betriebssystem-Software betrieben werden können. Ein Eingriff des Anwenders in das Betriebssystem des Netzwerkes und die Verwaltung der Hardware des PCs soll verhindert, die Implementierung und Laufendhaltung des Netzwerkes und die Installation der Betriebs- und Anwendungs-Software der Arbeitsplatzrechner sollen vereinfacht werden.

Gelöst wird diese Aufgabe durch die Merkmale des Anspruchs 1. Weitere günstige Ausgestaltungen sind in den Unteransprüchen dargelegt.

Durch ein vernetztes System, bestehend aus Client- und Serverkomponenten, kann das System auf die Anforderungen des Anwenders und des Systembetreibers optimal zugeschnitten werden. Mit der konsequenten Trennung des Verwaltungskernes eines Computer-Arbeitsplatzes zur Bereitstellung der administrativen Funktionen von dem darauf aufsetzenden Anwender seitig weitgehend frei konfigurierbaren Anwendungssystemen werden viele Vorteile bewirkt.

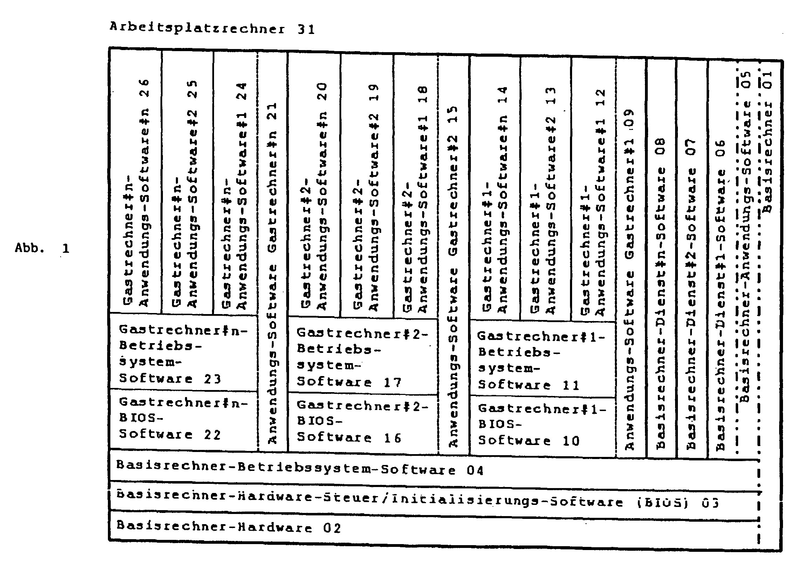

Die Verwendung einer einheitlichen, offenen Betriebsystem-Plattform (z. B. Linux), ermöglicht Stabilität bei der Einhaltung offener Protokolle, Kompatibilität, IT-Sicherheit, Innovativität, Verfügbarkeit der Quellen und oftmals Lizenzgebührfreiheit. Die auf Basis dieser Betriebssystem-Plattform in den Computer-Arbeitsplätzen betriebenen virtuellen Rechner gestatten die Nutzung verbreiteter Anwendungssoftware wie z.B. der Microsoft-Produkte, jedoch nun kontrolliert und vereinheitlicht. Ein weiterer Vorteil ist die Möglichkeit, das Anwendungssystem (Gastrechner-Betriebssystem-Software und Gastrechner-Anwendungssoftware, siehe Abbildung 1) als Datei (auch als Image bezeichnet) für alle Arbeitsplatzrechner auf einem Serversystem verfügbar zu machen, wodurch Installationen wesentlich vereinfacht werden.

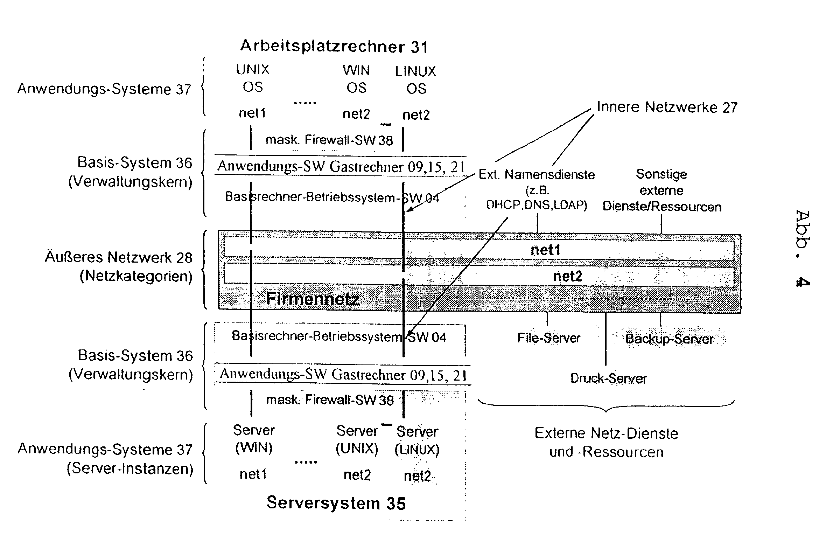

Durch den Einsatz einer maskierenden Firewall-Software im Basissystem sind alle Dienste des internen Netzwerkes (siehe Abbildung 2) nicht vom äußeren Netzwerk aus sichtbar. Damit ist nur ein indirekter Zugriff auf die Anwendungssysteme vom äußeren Netz aus möglich. Die verschiedenen Anwendungssysteme, die auf einem Computer-Arbeitsplatz betrieben werden, können fest unterschiedlichen externen Netzwerk-Kategorien zugeordnet werden (siehe Abbildung 4). Mit Netzwerk-Kategorien sind in diesem Zusammenhang externe Rechnernetze mit jeweils einer unterschiedlichen IT Sicherheitspolitik gemeint.

### [Ausführungsbeispiel]

Nachfolgend soll die Erfindung an einem Ausführungsbeispiel näher erläutert werden.
Abbildung 1 zeigt im Blockbild die Softwareverknüpfung in einem Arbeitsplatzrechner;
Abbildung 2 die Netzwerkkopplung des Arbeitsplatzrechners;
Abbildung 3 die Netzwerk-Architektur.
Abbildung 4 zeigt eine weitere bevorzugte Ausführungsform.

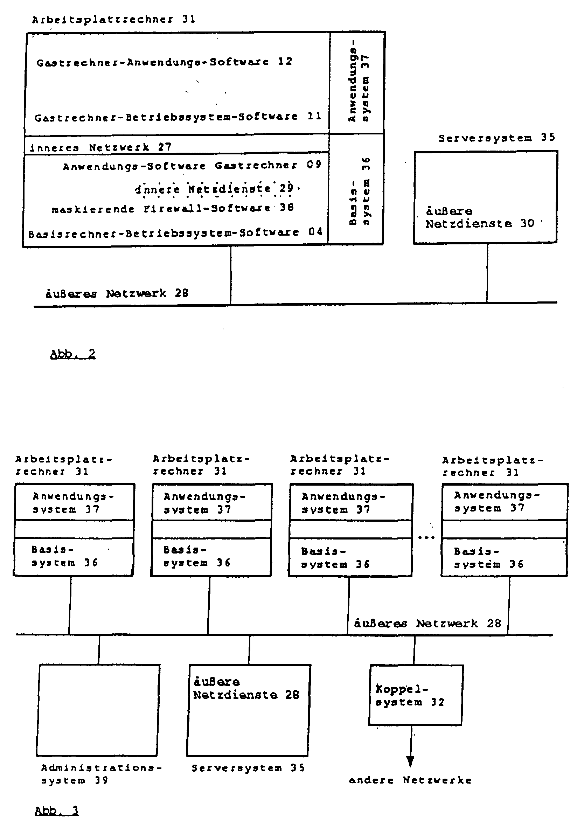

In einem Computernetzwerk (30, Abbildung 3) sind unterschiedliche Endsysteme gekoppelt: Koppelsysteme (32) wie z. B. Hubs, Router und Switches zur Verbindung mit anderen Netzwerken, Arbeitsplatzrechner (31) und Drucker als Interfaces zum Menschen, Serversysteme (35) zur Bereitstellung unterschiedlichster Netzwerkdienste. Jeder Arbeitsplatzrechner (31) im erfindungsgemäßen Netzwerk beinhaltet wie in Abbildung 1 dargestellt, Basisrechner-Hardware (02), Basisrechner-Hardware-Steuer/Initialisierungs-Software (03) und Basisrechner-Betriebssystem-Software (04), zusammengefasst zum Basisrechner (01). Auf dem Basisrechner (01) wird die Basisrechner-Anwendungs-Software (05) abgearbeitet. Wie in der Abbildung 1 dargestellt, simuliert die Anwendungs-Software (09) aus Sicht der Gastrechner-Betriebssystem-Software (11) einen virtuellen Rechner, dessen Eigenschaften durch die Gastrechner-Hardware-Steuer/Initialisierungs-Software (10) definiert werden. Durch diese Anordnung ist es möglich, spezielle, für die Gastrechner-Betriebssystem-Software (11) geschaffene Anwendungs-Software (12) abarbeiten zu können. Letztendlich ist es damit möglich, auf einer einzigen Basisrechner-Hardware (02) für unterschiedliche Betriebssysteme (04, 11, 17, 23) geschaffene Anwendungssoftware (05 bis 08, 12 bis 14, 18 bis 20 und 24 bis 26) abzuarbeiten.

Damit ist es mit der in Abbildung 1 gezeigten Softwareverknüpfung möglich, auf unterschiedlicher Basisrechner-Hardware (02) der Arbeitsplatzrechner (31) durch eine entsprechende Einstellung der Anwendungs-Software Gastrechner (09, 15, 21) und Konfiguration der dazugehörigen Gastrechner-Hardware-Steuer/Initialisierungs-Software (10, 16, 22.) eine einheitliche Anwendungs-Rechner-Plattform zu schaffen. Diese ist aus Sicht der Gastrechner-Betriebsystem-Software (11, 17, 23) und damit auch der Gastrechner-Anwendungs-Software (12 bis 14, 18 bis 20 und 24 bis 26) auf allen Arbeitsplatzsystemen identisch. Die Gastrechner-Betriebssystem-Software (11, 17, 23) und die Gastrechner-Anwendungssoftware (12 bis 14, 18 bis 20 und 24 bis 26) wird zu einer im initialen Zustand immer gleichen Einheit, dem Anwendungssystem (37) zusammengefasst und zentral für alle Arbeitsplatzrechner (31) auf einem Serversystem (35) im Netzwerk (33) als Datei verfügbar gemacht. Des weiteren kann der Prozess der Anpassung und Verfügbarmachung ("Betriebssysteminstallation") der Kombination aus Basisrechner-Betriebssystem-Software (04), grundlegender Basisrechner-Anwendungs-Software (05, 09, 10, 15, 16, 21 und 22) sowie mehrerer notwendiger Basisrechner-Dienst-Software (06 bis 08) zur Bereitstellung einer unifizierten Basisrechner-Plattform durch das damit entstehende Basissystem (36) weitestgehend automatisiert werden. Die hierzu notwendigen Spezifikationen lassen sich auf ein Minimum beschränken, da alle Anwendungsanforderungen vollständig in das Anwendungssystem (37) übertragen werden. Die Automatisierung der Herstellung des jeweiligen Basissystems (36) für einen konkreten Arbeitsplatzrechner (31) wird durch eine einschränkende Auswahl und Festlegung der Basisrechner-Hardware (02) begünstigt.

Wie in Abbildung 2 dargestellt, kommunizieren das Basissystem (36) und das/die Anwendungssystem(e) (37) eines Arbeitsplatzrechners (31) mit offenen oder proprietären Netzwerk-Protokollen über ein internes Netzwerk (27). Das interne Netzwerk (27) ist so ausgelegt, dass es vom äußeren Netzwerk (28) nicht sichtbar ist, jedoch jeglicher Datenaustausch mit dem externen Netzwerk (28) möglich ist, beispielsweise durch den Einsatz einer maskierenden Firewall-Software (38) im Basissystem (36). Damit sind auch alle Dienste (29) des internen Netzwerkes (27) nicht vom äußeren Netzwerk (28) aus sichtbar, so dass sich keine notwendige Verknüpfung äußerer- (28) und innerer Netzdienste (29) ergibt. Damit werden erfindungsgemäß auch alle inneren Netzdienste (29) gemeinsam mit den Anwendungssystemen (37) vereinheitlicht. Vom äußeren Netzwerk (28), als auch durch die äußeren Netzdienste (30) ist nunmehr auch das Anwendungssystem (37) nicht mehr sichtbar, erfindungsgemäß ist es nur über das Basissystem (36) erreichbar. Vom äußeren Netzwerk (28) aus ist damit nur ein indirekter Zugriff auf das Anwendungssystem (37) möglich.

Der Anwender hat zum Anwendungssystem (37) unbeschränkten Zugang, so dass er alle Modifikationen, sofern sie nicht bereits durch die endsprechende zentrale Konfiguration bei der Erstellung des Anwendungssystems (37) vorhanden sind, selbst vornehmen kann, d.h. er hat die vollständigen Administrationsrechte des Anwendungssystems (37) übertragen bekommen. Der Anwender hat jedoch keinerlei Zugang zum Basissystem (36), welches aus Anwendersicht sich völlig transparent verhält.

Die interne Software-Struktur eines Serversystems (35) kann in identischer Weise wie die des in Abbildung 1 dargestellten Arbeitsplatzrechners (31) aufgebaut werden. Dabei können durch die Gastrechner-Anwendungs-Software (12 bis 14, 18 bis 20 und 24 bis 26) äußere Netzdienste (30), Dienste zur Verteilung sowie Administration der zu Anwendungssystemen (37) korrespondierenden Dateien und spezielle Anwender spezifische Server-Dienste bereitgestellt werden. Auf einem physikalischen Rechner, d.h. auf einer Basisrechner-Plattform (02), können gleichzeitig mehrere Server-Instanzen, hier in Form mehrerer Anwendungssysteme (37), unter Verwendung der jeweils am besten geeigneten Gastrechner-Betriebsystem-Software (11, 17, 23), völlig unabhängig voneinander betrieben werden.

Eine Übersicht zur Netzwerkarchitektur zeigt Abbildung 3. Der Zugang zum Basissystem (36) des Arbeitsplatzrechners (31) wird nur vom Administrationssystem (39), einen für diesen Zweck speziell konfigurierte Arbeitsplatzrechner (31), ermöglicht. Die notwendigen äußeren Dienste (30) zur Konfiguration des Netzwerkes in seiner Gesamtheit zur Betriebszeit werden durch entsprechend konfigurierte Serversysteme (35) erbracht. Hierbei ist die Konfiguration der Basissysteme (36) der Arbeitsplatzrechner (31) zum Betrieb im Netzwerk (33) hinreichend.

Abbildung 4 zeigt eine typische Ausführungsform in einem Firmennetz (äußeres Netzwerk 28) und insbesondere die dedizierte Ankopplung der Anwendungssysteme (37) an ein strukturiertes, aus mehreren Netzkategorien (net1, net2) bestehenden Firmennetz. Weiterhin ist die gleichartige Software-Architektur von Arbeitsplatzrechner 31 und Serversystem 35 dargestellt. Für beide Systeme 31 und 35 verbinden die inneren Netzwerke 27 die Anwendungssysteme 37 (im Falle des Serversystems auch mit Server-Instanz bezeichnet) mit der vorgesehenen Netzkategorie des äußeren Netzwerks 28. Durch die maskierende Firewall-Software 38 (Bestandteil des nicht durch den Anwender modifizierbaren Basissystems 36) kann die Kommunikation sowohl zwischen Anwendungssystemen als auch zwischen Anwendungssystemen und Endgeräten oder Diensten des äußeren Netzes durch den Netzwerkbetreiber zentral gesteuert werden. Externe Dienste und Ressourcen im Firmennetz können über das Basissystem 36 von den Anwendungssystemen 37 über vereinheitlichte Schnittstellen genutzt werden. Alle über Einzelsysteme und unter verschiedenen Betriebsystemen im Firmennetz bereit gestellten Netz-Dienste und -Ressourcen können über das Server-System 35 auf einer physikalischen Plattform den Arbeitsplatzrechnern 31 zur Verfügung gestellt werden.

## Patentansprüche

1. System aus miteinander verbundenen Digitalrechnern (Client/Arbeitsplatzrechner) und weiteren Endsystemen wie Drucker, die mit einem Server verbunden sind (Computernetzwerk), mit einem Betriebssystem für das Verbundnetz und die Arbeitsplatzrechner, **dadurch gekennzeichnet,**
• **dass** jeder Arbeitsplatzrechner (31) des Systems (28) ein statisches Basissystem/Betriebssystem (36) als Verwaltungskern und Schnittstelle zur Trennung der administrativen Funktionen von den frei konfigurierbaren Anwendungssystemen besitzt,
• das Basissystem (36) aus einem Grundbetriebssystem, einer Bedienschnittstelle (z. B. graphische Oberfläche) und einer virtuellen Maschine mit Virtualisierungssoftware für ein virtuelles Rechnersystem und internes virtuelles Netzwerk besteht,
• die Anwendungssysteme (09, 10, 11, 12) auf dieses Basissystem aufbauen, wobei diese Software nur auf den virtuellen Maschinen läuft,
• der Server ebenfalls ein Basissystem/Betriebssystem (36) als Verwaltungskern und Schnittstelle besitzt, bestehend aus einem Grundbetriebssystem, einer graphischen Oberfläche für die physikalische Hardware und einer virtuellen Maschine mit Virtualisierungssoftware, die den Betrieb mehrerer Betriebssystem-Instanzen für IT-Services für bestimmte Netzkategorien ermöglicht.

2. System nach Anspruch 1, **dadurch gekennzeichnet, dass** die Software (03,04) des Basissystems (36) und des Serversystems (35) für die äußeren Netzdienste (28) systemgleich ist und die Anwendungssoftware (12,13,14) des Anwendungssystems (37)nach dem Nutzerbedürfnis konfiguriert wird.

3. System nach Anspruch 1 und 2, **dadurch gekennzeichnet, dass** das statische Basissystem/Betriebssystem (36) als Verwaltungskern und Schnittstelle aus einem auf minimalen Hardware-Ressourcenbedarf optimiertes Linux Betriebssystem, einer graphischen Oberfläche, X11 und VMWare für virtuelle Rechner besteht.

4. System nach Anspruch 1 bis 3, **dadurch gekennzeichnet, dass** das durch ein inneres Netzwerk (27) verbundenes Basissystem(36) und Anwendungssystems (37) durch eine maskierende Firewall-Software (38) voneinander so getrennt sind, dass kein Zugriff vom Arbeitsplatzrechner (37) auf das Serversystem (35) möglich ist.

5. System nach Anspruch 1 bis 4, **dadurch gekennzeichnet, dass** die Anwendungssysteme (37) proprietäre Software wie Microsoft Windows oder einen offenen Standard wie Linux besitzen.

6. System nach Anspruch 1 bis 5, **dadurch gekennzeichnet**, das die vom Verwaltungskern implementierte virtuelle Rechnerumgebung für die Anwendungssysteme im Netzwerk vereinheitlichte virtuelle Geräte, Speicher, Festplatten und Laufwerke sind.

7. System nach Anspruch 1 bis 6, **dadurch gekennzeichnet,**
**dass** der Server ein Installations-Services zur automatischen Installation von Client-Komponenten und/oder Anwendungssystemen in Form von Dateien besitzt.

8. System nach Anspruch 1, **dadurch gekennzeichnet, dass** die Dateien des Verwaltungskernes für Server- und Client-Komponenten auf einen nicht flüchtigen Speicher (Flashcard...) gehalten werden oder von einem nicht manipulierbaren Medium (CD-Rom...) in den physikalischen Speicher des Rechners ladbar sind.

9. Verfahren zur Steuerung aus miteinander verbundenen Arbeitsplatzrechnern mit einem Betriebssystem für das Verbundnetz und die Arbeitsplatzrechner, **dadurch gekennzeichnet,**
• **dass** für das Basissystem (36) einheitliche Grundbetriebssysteme, eine graphische Oberfläche für die physikalische Hardware, eine virtuelle Maschine mit Virtualisierungssoftware für ein virtuelles Rechnersystem und ein internes virtuelles Netzwerk vom Nutzer nicht beeinflussbar installiert wird,
• und die Anwendungssysteme (09, 10, 11 12) in den Arbeitsplatzrechnern(31) als Dateien vom Installationsservices des Servers 35 installiert werden.

10. Verfahren nach Anspruch 9, **dadurch gekennzeichnet,**
**dass** die Gastrechner-Betriebssystem-Software (11, 17, 23) und die Gastrechner-Anwendungssoftware (12 bis 14, 18 bis 20 und 24 bis 26) zu einer im initialen Zustand immer gleichen Einheit, dem Anwendungssystem (37) zusammengefasst und zentral für alle Arbeitsplatzrechner (31) auf einem Serversystem (35) im Netzwerk (33) als Datei verfügbar gemacht wird.

11. Verfahren nach Anspruch 9 bis 10, **dadurch gekennzeichnet, dass** die Gastrechner-Betriebssystem-Software (10, 11..) und die Anwendungssoftware 12, 13, 14..) mit einer vom Basisrechner-Betriebssystem-Software (04) abweichende Software betrieben wird.

12. Verfahren nach Anspruch 9 bis 11, **dadurch gekennzeichnet,**
**dass** das Basissystem (36) und das/die Anwendungssystem(e) (37) eines Arbeitsplatzrechners (31) mit offenen oder proprietären Netzwerk-Protokollen über ein internes Netzwerk (27) miteinander verbunden sind.

13. Verfahren nach Anspruch 9 bis 12, **dadurch gekennzeichnet,**
**dass** das interne Netzwerk (27) so ausgelegt ist, dass es vom äußeren Netzwerk (28) nicht sichtbar ist, jedoch jeglicher Datenaustausch mit dem externen Netzwerk (28) möglich ist, indem eine maskierende Firewall-Software (38) im Basissystem (36) installiert wird.

14. Verfahren nach Anspruch 9 bis 13, **dadurch gekennzeichnet,**
**dass** die Anwendungssysteme bestimmten externen verschiedenen Netzkategorien zugeordnet werden und der Datenaustausch zwischen verschiedenen Anwendungssystemen und externen Netzkategorien über die integrierte Firewall-S/W im Verwaltungskern gesteuert wird.

## Geänderte Patentansprüche

### Geänderte Patentansprüche gemäss Regel 86(2) EPÜ.

**1.** System aus miteinander verbundenen Digitalrechnern (Client/Arbeitsplatzrechner) und weiteren Endsystemen wie Drucker, die mit einem Server verbunden sind (Computernetzwerk), mit einem Betriebssystem für das Verbundnetz und die Arbeitsplatzrechner, wobei jeder Arbeitsplatzrechner (31) des Systems (28) ein statisches Basissystem/Betriebssystem (36) als Verwaltungskern besitzt und das Basissystem (36) aus einem Grundbetriebssystem, einer Bedienschnittstelle (z. B. graphische Oberfläche) und einer virtuellen Maschine mit Virtualisierungssoftware für ein virtuelles Rechnersystem und internes virtuelles Netzwerk besteht, **dadurch gekennzeichnet,**
• **dass** das Basissystem/Betriebssystem (36) eine Schnittstelle zur Trennung der administrativen Funktionen von den frei konfigurierbaren Anwendungssystemen ist,
• die Anwendungssysteme (09, 10, 11, 12) auf dieses Basissystem aufbauen, wobei diese Software nur auf den virtuellen Maschinen läuft,
• der Server ebenfalls ein Basissystem/Betriebssystem (36) als Verwaltungskern und Schnittstelle besitzt, bestehend aus einem Grundbetriebssystem, einer graphischen Oberfläche für die physikalische Hardware und einer virtuellen Maschine mit Virtualisierungssoftware, die den Betrieb mehrerer Betriebssystem-Instanzen für IT-Services für bestimmte **Netzkategorien ermöglicht.**

**2.** System nach Anspruch 1, **dadurch gekennzeichnet, dass** die Software (03,04) des Basissystems (36) und des Serversystems (35) für die äußeren Netzdienste (28) systemgleich ist und die Anwendungssoftware (12,13,14) des Anwendungssystems (37)nach dem Nutzerbedürfnis konfiguriert wird.

**3.** System nach Anspruch 1 und 2, **dadurch gekennzeichnet, dass** das statische Basissystem/Betriebssystem (36) als Verwaltungskern und Schnittstelle aus einem auf minimalen Hardware-Ressourcenbedarf optimiertes Linux Betriebssystem, einer graphischen Oberfläche, X11 und VMWare für virtuelle Rechner besteht.

**4.** System nach Anspruch 1 bis 3, **dadurch gekennzeichnet, dass** das durch ein inneres Netzwerk (27) verbundenes Basissystem(36) und Anwendungssystems (37) durch eine maskierende Firewall-Software (38) voneinander so getrennt sind, dass kein Zugriff vom Arbeitsplatzrechner (37) auf das Serversystem (35) möglich ist.

**5.** System nach Anspruch 1 bis 4, **dadurch gekennzeichnet, dass** die Anwendungssysteme (37) proprietäre Software wie Microsoft Windows oder einen offenen Standard wie Linux besitzen.

**6.** System nach Anspruch 1 bis 5, **dadurch gekennzeichnet**, das die vom Verwaltungskern implementierte virtuelle Rechnerumgebung für die Anwendungssysteme im Netzwerk vereinheitlichte virtuelle Geräte, Speicher, Festplatten und Laufwerke sind.

**7.** System nach Anspruch 1 bis 6, **dadurch gekennzeichnet,**
**dass** der Server ein Installations-Services zur automatischen Installation von Client-Komponenten und/oder Anwendungssystemen in Form von Dateien besitzt.

**8.** System nach Anspruch 1, **dadurch gekennzeichnet, dass** die Dateien des Verwaltungskernes für Server- und Client-Komponenten auf einen nicht flüchtigen Speicher (Flashcard...) gehalten werden oder von einem nicht manipulierbaren Medium (CD-Rom...) in den physikalischen Speicher des Rechners ladbar sind.

**9.** Verfahren zur Steuerung aus miteinander verbundenen Arbeitsplatzrechnern mit einem Betriebssystem für das Verbundnetz und die Arbeitsplatzrechner, wobei die Arbeitsplatzrechner eine virtuelle Maschine mit Virtualisierungssoftware für ein virtuelles Rechnersystem besitzen, **dadurch gekennzeichnet,**
• **dass** für das Basissystem (36) einheitliche Grundbetriebssysteme, eine graphische Oberfläche für die physikalische Hardware, eine virtuelle Maschine mit Virtualisierungssoftware für ein virtuelles Rechnersystem und ein internes virtuelles Netzwerk vom Nutzer nicht beeinflussbar installiert werden,
• und die Anwendungssysteme (09, 10, 11 12) in den Arbeitsplatzrechnern(31) als Dateien vom Installationsservices des Servers 35 installiert werden.

**10.** Verfahren nach Anspruch 9, **dadurch gekennzeichnet,**
**dass** die Gastrechner-Betriebssystem-Software (11, 17, 23) und die Gastrechner-Anwendungssoftware (12 bis 14, 18 bis 20 und 24 bis 26) zu einer im initialen Zustand immer gleichen Einheit, dem Anwendungssystem (37) zusammengefasst und zentral für alle Arbeitsplatzrechner (31) auf einem Serversystem (35) im Netzwerk (33) als Datei verfügbar gemacht wird.

**11.** Verfahren nach Anspruch 9 bis 10, **dadurch gekennzeichnet, dass** die Gastrechner-Betriebssystem-Software (10, 11..) und die Anwendungssoftware 12, 13, 14..) mit einer vom Basisrechner-Betriebssystem-Software(04) abweichende Software betrieben wird.

**12.** Verfahren nach Anspruch 9 bis 11, **dadurch gekennzeichnet, dass** das Basissystem (36) und das/die Anwendungssystem(e) (37) eines Arbeitsplatzrechners (31) mit offenen oder proprietären Netzwerk-Protokollen über ein internes Netzwerk (27) miteinander verbunden sind.

**13.** Verfahren nach Anspruch 9 bis 12, **dadurch gekennzeichnet, dass** das interne Netzwerk (27) so ausgelegt ist, dass es vom äußeren Netzwerk (28) nicht sichtbar ist, jedoch jeglicher Datenaustausch mit dem externen Netzwerk (28) möglich ist, indem eine maskierende Firewall-Software (38) im Basissystem (36) installiert wird.

**14.** Verfahren nach Anspruch 9 bis 13, **dadurch gekennzeichnet, dass** die Anwendungssysteme bestimmten externen verschiedenen Netzkategorien zugeordnet werden und der Datenaustausch zwischen verschiedenen Anwendungssystemen und externen Netzkategorien über die integrierte Firewall-S/W im Verwaltungskern gesteuert wird.
